# EUROPÄISCHE PATENTSCHRIFT

(11) **EP 2 084 407 B1**
(45) Veröffentlichungstag und Bekanntmachung des Hinweises auf die Patenterteilung: **05.09.2012**
(21) Anmeldenummer: 06805491.5
(22) Anmeldetag: 27.10.2006
(51) Int. Cl.: F15B 15/06, B60G 21/055

(54) **EINRICHTUNG ZUM AUSGLEICH UND/ODER ZUR ÜBERTRAGUNG VON KRÄFTEN/MOMENTEN UND DREHBEWEGUNGEN ZWISCHEN ZWEI BAUTEILEN**
DEVICE FOR COMPENSATING AND/OR FOR TRANSMITTING FORCES/TORQUES AND ROTATIONAL MOVEMENTS BETWEEN TWO COMPONENTS
DISPOSITIF POUR COMPENSER ET/OU TRANSMETTRE DES FORCES/COUPLES ET DES MOUVEMENTS DE ROTATION ENTRE DEUX COMPOSANTS

(30) Priorität: 23.10.2006 DE 202006016354 U
(43) Veröffentlichungstag der Anmeldung: 05.08.2009
(73) Patentinhaber: Asturia Automotive Systems AG, 80538 München (DE)
(72) Erfinder: LEZOCK, Daniel, 09488 Thermalbad Wiesenbad (DE); FREUND, Wolfgang, 08428 Langenbernsdorf (DE); SCHULZE, Jürgen, 09122 Chemnitz (DE)
(74) Vertreter: Rumrich, Gabriele
(86) Internationale Anmeldenummer: PCT/DE2006/001894
(87) Internationale Veröffentlichungsnummer: WO 2008/049382

(56) Entgegenhaltungen:
- WO-A-03/072955
- DE-A1- 19 821 209
- DE-B3- 10 245 457
- FR-A1- 2 406 247
- JP-A- 5 319 063
- US-A1- 2005 167 932

## Beschreibung

Die Erfindung betrifft eine Einrichtung zum Ausgleich und/oder zur Übertragung von Kräften/Momenten und Drehbewegungen zwischen zwei Bauteilen, und findet insbesondere zum Ausgleich von Fahrzeugbewegungen z.B. bei aktiven Fahrwerken zur Fahrwerksstabilisierung Anwendung.

Aus der WO 03/072955 A ist ein linienförmiger Schwenkantrieb, insbesondere für die Klappensteuerung aerodynamischer Strukturen bekannt. Dieser umfasst ein Gehäuse, in dem ein Kolben durch Beaufschlagung eines Druckmediums axial verschiebbar angeordnet ist. Eine Antriebswelle wirkt mit dem Kolben über ein Gewinde zusammen. Durch das Gewinde wird durch die Axialbewegung des Kolbens eine Drehbewegung auf die Antriebswelle übertragen. Dabei sind die großen Reibungskräfte, die durch das Gewinde wirken, nachteilig. Weiterhin nachteilig ist, dass die Abtriebswelle zwei Teilabschnitte aufweist, auf die ein Drehmoment mit identischer Drehrichtung angreift. Es ist mit dieser Lösung nicht möglich, unterschiedliche und sogar gegensinnige Drehmomente auf die zwei Wellenabschnitte zu übertragen. Diese Lösung ist somit nicht zum Ausgleich von Kräften und Momenten zwischen zwei Bauteilen geeignet.

Eine Fahrzeugaufhängung mit Rollstabilisator ohne Verwendung eines Kolbens beschreibt DE 198 21 209 A1. Diese Fahrzeugaufhängung besitzt einen stabförmigen Stabilisator, der mit dem Fahrzeug verbunden ist und zwei Lenker, die den Stabilisator mit den Rädern verbinden. Durch zwei wahlweise betätigbare Begrenzer kann die Drehbewegung eingeschränkt werden. Durch einen zentralen Abschnitt wird eine Torsionskraft erzeugt. Die Verwendung der zwei Begrenzer erfordert dabei einen hohen Bauraumbedarf und ist relativ aufwendig.
In der US2005/167932, die im Wesentlichen der DE102004004335A1 entspricht, wird eine Fahrwerksanordnung für ein Fahrzeug beschrieben, wobei der Aktuator zum Schwenken der Stabilisatorhälften separate Antriebseinheiten aufweist, die in Form von Elektromotoren ausgebildet sind. Nachteig ist, dass dieser Aktuator ein aufwendiges Getriebe aufweist.

Ein Stabilisator mit zwei druckmittelbeaufschlagbaren Kolben und einer Kugelspindel wird in JP 05319063 A offengelegt. Dieser weist ebenfalls einen komplizierten konstruktiven Aufbau auf.

DE 197 54 539 C2 beschreibt einen Schwenkmotor, welcher in einer geteilten Fahrzeugachse angeordnet ist und einen Zylinder mit radialen Rippen an der Zylinderinnenseite aufweist. Im Zylinder ist weiterhin eine Motorwelle mit Flügeln angeordnet. Die Rippen und die Flügel bilden Arbeitskammern, die mit einem hydraulischen Druck beaufschlagbar sind, wodurch eine Rotation der Motorwelle gegenüber dem Gehäuse erfolgt. Ein Ende des Gehäuses ist fest mit einem Teil der Fahrzeugachse verbunden und das andere Ende ist als Drehwelle ausgebildet und mit dem anderen Teil der Fahrzeugachse verbunden, so dass Fahrzeugbewegungen durch eine Drehbewegung der Drehwelle und einer damit verbundenen Verdrehung der beiden Teile der Fahrzeugachse ausgeglichen werden können.

Es sind weiterhin Lösungen zur Betätigung von Ventilen und Schiebern bekannt, bei welchen durch Koppelstangen, die in einem Gehäuse angeordnet sind und einerseits am Gehäuse und einem Kolben bzw. zwischen zwei Kolben gelagert sind, ein Stellweg durch Umwandeln einer rotierenden Bewegung in eine geradlinige Bewegung erzeugt wird. Das Gehäuse ist dabei nicht an einem Bauteil befestigt und es wird generell nur ein rotierender Wellenabgang zur Verfügung gestellt. FR 2 406 247 A beschreibt dabei eine Lösung, bei der unter Verwendung von Koppelstangen in Verbindung mit Kolben eine geradlinige in eine nicht geradlinige Bewegung umgewandelt wird.
Eine weitere Lösung wird in US 4133215 A dargestellt. Diese betrifft ebenfalls eine Vorrichtung für das Umwandeln von linearen und rotierenden Bewegungen und findet als Antriebs- und Betätigungseinheit für ein 90° - Drehventil, beispielsweise ein Ventil mit einem Absperrkörper (Kegel- oder Kugelventil), Anwendung.

Auch die in Druckschrift US 3156161 A beschriebene Lösung betrifft die Anwendung für Ventile.

Der Einsatz für Ventile oder Hähne, die in relativ großen Abständen geöffnet oder geschlossen werden und der Ausgleich von Fahrwerksbewegungen und die Reduktion von Fahrzeugschwingungen, die eine wesentlich größere Frequenz bei entsprechenden Stellwegen erfordern, sind dabei nicht miteinander vergleichbar.

Eine gattungsgemäße Einrichtung in Form eines Schwenkmotors zur Fahrwerksstabilisierung bei aktiven Fahrwerken wird in DE 102 45 457 B3 offenbart. Der Schwenkmotor wird üblicher Weise in einer geteilten Achse (Stabilisator) angeordnet, und eine Seite des Gehäuses ist fest mit der Achse verbunden. Durch die andere Seite des Gehäuses ragt eine Drehwelle, die mit der Achse verbunden ist. Im Gehäuse sind ein axial bewegbarer Kolben sowie Druckmittelanschlüsse vorhanden, die zu Druckräumen vor und hinter dem Kolben reichen. Die Drehwelle ist durch eine Axialbewegung des Kolbens in Rotation versetzbar, so dass beide Teile der Achse zueinander verdreht werden können. Die Umwandlung der Axialbewegung des Kolbens in eine Drehbewegung der Drehwelle erfolgt Ober Kugelstangen, die am Kolben und am Gehäuse befestigt sind. Nachträglich ist der relativ große Bauraum und der teilweise noch komplizierte Aufbau. Weiterhin weist diese Lösung lediglich einen Wellenausgang auf, wodurch deren Einsatzgebiet begrenzt ist.

Aufgabe der Erfindung ist es, eine Einrichtung zum Ausgleich und/oder zur Übertragung von Kräften/Momenten und Drehbewegungen zwischen zwei Bauteilen, insbesondere zum Ausgleich von Fahrzeugbewegungen zu schaffen, die einen einfachen konstruktiven Aufbau aufweist und mit geringem Aufwand herstellbar sowie vielfältig einsetzbar ist.

Diese Aufgabe wird mit den kennzeichnenden Merkmalen des ersten Patentanspruchs gelöst. Vorteilhafte Ausgestaltungen ergeben sich aus den Unteransprüchen.

Erfindungsgemäß umfasst die Erfindung eine Einrichtung zum Ausgleich und/oder zur Übertragung von Kräften/Momenten und Drehbewegungen zwischen zwei Bauteilen, insbesondere zum Ausgleich von Fahrzeugbewegungen, wobei wenigstens ein Gelenkmodul zwischen den zwei Bauteilen angeordnet ist, mit dem eine translatorische und/oder rotatorische Bewegung eines druckmittelbeaufschlagten Kolbens in eine rotatorische Bewegung wenigstens einer ersten Drehwelle oder einer ersten und einer zweiten Drehwelle wandelbar ist.
Dadurch, dass wahlweise eine oder zwei Drehwellen einsetzbar ist, kann die Einrichtung überraschend vielfältig zum Ausgleich von Fahrzeugbewegungen eingesetzt werden.
Weiterhin ist es erstmalig möglich, mehrere Gelenkmodule miteinander zu koppeln, wodurch der mögliche Schwenkwinkel im Vergleich zu herkömmlichen Lösungen wesentlich erhöht werden kann. Dabei kann jeder Gelenkmodul in einem separaten Gehäuse oder mehrere Gelenkmodule in einem gemeinsamen Gehäuse angeordnet sein.
Beim Einsatz mehrere Gelenkmodule können diese euch zueinander axial verstellbar bzw. bewegbar angeordnet sein, wodurch es möglich ist Axialbewegungen bzw. Axialkräfte zu erzeugen oder aufzunehmen bzw. auszugleichen.
Weiterhin ist es möglich, jeweils zwei Gelenkmodule zueinander schwenkbar anzuordnen.

Der Gelenkmodul zum Ausgleich von Fahrzeugbewegungen weist ein Gehäuse in dem ein Kolben angeordnet ist, sowie einen ersten Wellenausgang in Form einer ersten Drehwelle auf, die in Abhängigkeit von den Fahrzeugbewegungen in Rotation versetzbar ist und über erste Koppelelemente, die an beiden Enden drehbeweglich gelagert sind, mit dem Kolben in Wirkverbindung steht, wobei beidseitig zum Kolben Druckräume angeordnet sind.

Weiterhin kann der Gelenkmodul jeweils einzelne oder Kombinationen der folgenden Merkmalsgruppen enthalten, wobei
a) zu einem oder beiden Druckräumen je eine Druckmittelleitung in axialer Richtung des Schwenkmotors durch das Gehäuse führt
   und/oder
b) die Koppelelemente an ihren Enden Kugeln aufweisen und kolbenseitig und/oder drehwellenseitig und/oder in Richtung eines Abschlussdeckels des Gehäuses mittels jeweils eines Befestigungsrings in Kugelkalotten fixiert, wobei der Befestigungsring Durchbrüche aufweist, durch welche die Kugeln der Koppelelemente hindurchführbar sind
   und/oder
c) die Koppelelemente an ihren Enden Kugeln aufweisen, wobei die Kugeln kolbenseitig und/oder drehwellenseitig und/oder in Richtung eines Abschlussdeckels des Gehäuses mittels jeweils eines Befestigungsrings in Kugelkalotten fixiert sind, wobei der Befestigungsring kolbenseitig und/oder drehwellenseitig und/oder in Richtung eines Abschlussdeckels des Gehäuses in axialer Richtung des Schwenkmotors stoffschlüssig verbunden/verschweißt ist
   und/oder
d) die Koppelelemente an ihren Enden Kugeln aufweisen, die kolbenseitig und/oder drehwellenseitig in Kugelkalotten fixiert sind, wobei die Kugelkalotten in radialer Richtung sich zu einem Durchmesser erweitern, der größer ist als der Durchmesser der Kugeln und wobei der Kalottenpolabstand der Kugelkalotten gleich dem Durchmesser der Kugel ist
   und/oder
e) der Kolben einen mit dem ersten Druckraum verbundenen dritten Druckraum und einen mit dem zweiten Druckraum verbundenen vierten Druckraum aufweist
   und/oder
f) auf der der ersten Drehwelle gegenüberliegenden Seite des Kolbens ein zweiter Wellenausgang in Form einer zweiten Drehwelle angeordnet ist, die über zweite Koppelelemente, die an beiden Enden drehbeweglich gelagert sind, mit dem Kolben in Wirkverbindung steht.

Der Kolben ist axialbeweglich und drehbeweglich gelagert, wobei zwischen der ersten Drehwelle und dem Kolben ein erster Druckraum angeordnet ist, zu dem die erste Druckmittelleitung führt. Auf der anderen Seite des Kolbens ist ein zweiter Druckraum angeordnet, zu welchem die zweite Druckmittelleitung führt. Je nach konstruktiver Ausführung des Gelenkmoduls ist dabei der zweite Druckraum zwischen dem Kolben und einem gehäuseseitigen Deckel (Gelenkmodul mit einer Drehwelle) oder zwischen dem Kolben und einer zweiten Drehwelle (Gelenkmodul mit zwei Drehwellen) ausgebildet. Die mit dem ersten Druckraum verbundene erste Druckmittelleitung und die mit dem zweiten Druckraum verbundene zweite Druckmittelleitung führen bevorzugt in Richtung der Längsachse des Gelenkmoduls durch am Gehäuse beidseitig angeordnete Gehäusedeckel.
Durch diese axiale Druckmittelzuführung kann der Bauraum des Gelenkmoduls wesentlich verringert oder dessen Leistung bei gleichem Bauraum erhöht werden.

Alternativ ist es möglich, die mit dem ersten Druckraum verbundene erste Druckmittelleitung und die mit dem zweiten Druckraum verbundene zweite Druckmittelleitung über am Gehäuse befestigte Anschlüsse in radialer Richtung durch das Gehäuse zu führen.
Die Koppelelemente sind bevorzugt als Kugelstangen ausgebildet und werden, wie vorgenannt beschrieben, an ihren Kugeln mittels Befestigungsringen in Kugelkalotten fixiert.
Die als Kugelstangen ausgebildeten Koppelelemente sind sowohl drehwellenseitig und/oder deckelseitig mit ihren endseitig angeordneten Kugeln in Kugelkalotten eines drehwellenseitig und/oder deckelseitig befestigten Kalottenrings als auch in Kugelkalotten des Kolbens mit Befestigungsringen fixiert. Um die Montage der Kugelstangen zu gewährleisten, weisen die Befestigungselemente entsprechende Durchbrüche auf.
Die Befestigungsringe sind zum Durchführen der Kugeln in radialer Richtung nach außen oder nach innen geschlitzt ausgebildet. Dazu weisen die Befestigungsringe einen Boden auf, in dem konkav gekrümmte Ausnehmungen zur Bildung der Kugelkalotten angeordnet sind. Weiterhin besitzt der Boden einen mittigen Durchbruch, von dem aus die Schlitze zu den konkav gekrümmten Ausnehmungen führen. Die Breite der Schlitze muss dabei größer sein, als der Durchmesser der Stange, welche die Kugeln der Kugelstange verbindet.

Alternativ können die Befestigungsringe einen Boden aufweisen, in dem konkav gekrümmte Ausnehmungen zur Bildung der Kugelkalotten angeordnet sind, wobei jeder Ausnehmung eine radialer Richtung und/oder in Umfangsrichtung versetzte Bohrung zugeordnet ist, die in die Ausnehmung übergeht und deren Durchmesser größer ist als der Kugeldurchmesser. Die zu montierende Kugel einer Kugelstange wird aus der der Kugelkalotte gegenüberliegenden Seite durch die Bohrung geführt und dann in die Kugelkalotte eingelegt.

Bevorzugt ist jeweils ein Befestigungsring mit dem Kolben und jeweils ein Befestigungsring mit dem Kalottenring stoffschlüssig verbunden.
Dies erfolgt insbesondere durch eine Schweißverbindung. Die Schweißnaht verläuft bevorzugt axial und ist umfangsseitig geschlossenen.. Dazu ist der Befestigungsring mit dem Kalottenring bzw. mit dem Kolben über eine in axialer Richtung verlaufende Schweißnaht verschweißt.
Dies hat den Vorteil, dass ein Toleranzausgleich zwischen den zu fügenden Bauteilen möglich ist und Schrumpfspannungen vermieden werden. Dazu besitzen die Befestigungsringe jeweils einen den Kolben oder den Kalottenring in axialer Richtung umfangsseitig übergreifenden Rand. Der Rand eines Befestigungsringes und der angrenzende Bereich des Kolbens bzw. des Kalottenrings werden miteinander vorzugsweise axial verschweißt (z.B. mittels Laserschweißen). Durch den Schweißvorgang, der entfernt von den Kugelkalotten mit einer axialen Schweißnaht erfolgt, werden unerwünschten Spannungen im Bereich der Kugelkalotten vermieden.
Selbstverständlich kann auch eine radiale Schweißnaht verwendet werden oder auch eine andere stoffschlüssige Verbindung (Löt- oder Klebeverbindung)

Da die Kugelkalotten in radialer Richtung sich zu einem Durchmesser erweitern, der größer ist als der Durchmesser der Kugeln und der Kalottenpolabstand der Kugelkalotten gleich dem Durchmesser der Kugel ist, kommt einer verzugs- und spannungsfreien Lagerung der Kugeln in den Kugelkalotten eine große Bedeutung zu.

Weist der Kolben einen mit dem ersten Druckraum verbundenen dritten Druckraum und einen mit dem zweiten Druckraum verbundenen vierten Druckraum auf, kann dadurch die wirksame Kolbenfläche und somit die Leistung des Gelenkmoduls erheblich gesteigert werden. Der Kolben ist dazu im Längsschnitt gesehen H-förmig ausgebildet, d.h. weist in seinem mittleren Bereich einen reduzierten Durchmesser auf, an den sich eine dritte und vierte zusätzliche Kolbenfläche anschließt, wobei sich die der dritte und der vierte Druckraum in einem Hohlraum zwischen dem Gehäuse, des reduzierten Durchmessers und der dritten und vierten Kolbenfläche des Kolbens befinden und durch eine Trennwand voneinander getrennt sind.
Der erste Druckraum steht dabei über eine erste Verbindungsleitung mit dem sich auf der dem ersten Druckraum abgewandten Seite der Trennwand befindlichen dritten Druckraum in Verbindung.
Ebenso besteht zwischen dem zweiten Druckraum über eine zweite Verbindungsleitung mit dem sich auf der dem zweiten Druckraum abgewandten Seite der Trennwand befindlichen vierten Druckraum eine Verbindung.
Die Trennwand liegt sowohl am Gehäuse als auch am reduzierten Durchmesser des H-förmigen Kolbens an und dichtet den dritten und den vierten Druckraum zueinander ab. Bevorzugt ist die Trennwand dabei gestellfest am Gehäuse angeordnet.

Weist der Gelenkmodul eine erste und eine zweite Drehwelle auf, sind die auf einer Seite des Kolbens angeordnete erste Drehwelle und die ersten Koppelelemente und die auf der anderen Seite des Kolbens angeordnete zweite Drehwelle und die zweiten Koppelelemente bevorzugt spiegelbildlich zur Mittenachse des Kolbens angeordnet(bei einer mittigen Position des Kolbens), wobei die Mittenachse senkrecht zur Längsachse der Drehwellen verläuft.

Es ist jedoch auch möglich, die auf einer Seite des Kolbens angeordneten ersten Koppelelemente zu den auf der anderen Seite des Kolbens angeordneten zweiten Koppelelementen in Umfangsrichtung versetzt anzuordnen, so dass jeweils zwischen zwei Kugeln der ersten Koppelelemente eine Kugel der zweiten Koppelelemente am Kolben befestigt ist und umgekehrt.

Durch Druckbeaufschlagung des ersten Druckraums und/oder des zweiten Druckraums bewegt sich der Kolben in die Richtung des Druckraums mit dem geringeren Druck, wodurch erste Drehwelle und die zweite Drehwelle in entgegen gesetzte Rotation versetzt werden und Wankbewegungen des Fahrzeuges ausgeglichen werden können
Sind beide Druckmittelleitungen verschlossenen sind beide Drehwellen miteinander starr gekoppelt.
Bei druckentlasteten Druckräumen sind beide Drehwellen entkoppelt und unabhängig voneinander schwenkbar.Jede Drehwelle stützt sich über ein axiales Drucklager an einem endseitig angeordneten Gehäusedeckel ab.

Weiterhin können am Außenumfang der Befestigungsringe Nuten zur Aufnahme von Führungsringen angeordnet sein.
Zwischen den Druckräumen und dem Drucklager ist jeweils eine Dichtung angeordnet.
Zur Gewährleistung der Montage und zur Vereinfachung der Fertigung ist er Kolben senkrecht zur Längsachse der Drehwellen in zwei Hälften geteilt. Beide Hälften des Kolbens können mittels eines Zentrierringes zueinander zentrisch gelagert, wobei ein Vorsprung einer Hälfte des Kolbens in eine Ausnehmung der sich anschließenden Hälfte des Kolbens lagefixierend eingreift. Alternativ können die beiden Kolbenhälften mit einander zentrierenden Formelementen versehen sein, die ineinander eingreifen.
Beide Kolbenhälften sind miteinander stoffschlüssig verbunden, insbesondere verschweißt (z.B. mittels Laserschweißen).
Auch die Gehäusedeckel sind mit dem Gehäuse bevorzugt verschweißt.

Der Gelenkmodul wird z.B. in einem Stabilisator angeordnet, der mit dem Fahrwerk in Verbindung steht. Dabei ist die erste Drehwelle mit einer ersten Hälfte des Stabilisators und der gegenüberliegende Gehäusedeckel bzw. das Gehäuse oder die zweite Drehwelle mit der zweiten Hälfte des Stabilisators verbunden.
Wird nur eine Drehwelle verwendet können bereits durch deren Schwenkbewegung Neigungen des Fahrzeuges ausgeglichen werden.
Diese Ausführungsform kann beispielsweise direkt einem Rad zugeordnet sein und die Radbewegungen tilgen. Bei Verwendung von zwei Drehwellen können durch entgegengesetzte Dreh- bzw. Schwenkbewegung der beiden Drehwellen größere Neigungswinkel des Fahrzeuges ausgeglichen werden. Bei Druckbeaufschlagung eines Druckraums und bei Druckentlastung des anderen Druckraums bewegt sich der Kolben in Richtung zum druckentlasteten Druckraum, wodurch über die Koppelelemente beide Drehwellen zueinander entgegen gesetzte Schwenkbewegungen ausführen. Sind beide Druckräume drucklos, so sind beide Drehwellen entkoppelt und unabhängig voneinander schwenkbar, wobei sich der Kolben axial bewegt und eine Drehbewegung ausführt. Bei verschlossenen Druckmittelleitungen sind beide Drehwellen miteinander starr gekoppelt, so dass der Stabilisator wie ein einteiliges Element wirkt, wobei der Kolben feststeht.

Mit der erfindungsgemäßen Lösung wird eine Einrichtung zum Ausgleich und/oder zur Übertragung von Kräften/Momenten und Drehbewegungen zwischen zwei Bauteilen geschaffen, die insbesondere zum Ausgleich von Fahrzeugbewegungen dient und bei einem einfachen konstruktiven Aufbau und geringem Bauraum vielseitig einsetzbar ist.
Die Erfindung wird nachfolgend anhand von Ausführungsbeispielen näher erläutert. Es zeigen:
- Fig. 1:: Prinzipdarstellung eines Gelenkmoduls mit einer Drehwelle und axialer Druckmittelzuführung,
- Fig. 1a:: Aufbau eines Gelenkmoduls S mit zwei Drehwellen und mit radialer Druckmittelzuführung,
- Fig. 2:: Ausschnitt aus Fig. 1 mit auseinander gezogenen Befestigungsringen,
- Fig. 2.1:: Ausschnitt aus Fig. 1 mit aneinander anliegenden Befestigungsringen,
- Fig. 2.2:: Koppelelement Kugelstange,
- Fig. 2.3:: Querschnitt durch eine Kugelkalotte mit einer darin befindlichen Kugel,
- Fig. 3:: Kolben mit Aufnahmen für Koppelelemente,
- Fig. 3.1:: Kolben mit Boden und Aufnahmen für Koppelelemente,
- Fig. 4:: Befestigungsring mit Aufnahmen für Koppelelemente,
- Fig. 4.1:: Befestigungsring mit Boden und Aufnahmen für Koppelelemente,
- Fig. 5: Aufbau eines Gelenkmoduls S mit axialer Druckmittelzuführung und einer Drehwelle,
- Fig. 6: Gelenkmodul S mit axialer Druckmittelzuführung, einer Drehwelle und zusätzlichen Druckräumen im Kolben,
- Fig. 7:: Einrichtung mit zwei Gelenkmodulen, die zueinander axial beweglich angeordnet sind,
- Fig. 8.: Einrichtung mit zwei Gelenkmodulen, die zueinander im Winkel versetzt angeordnet sind.

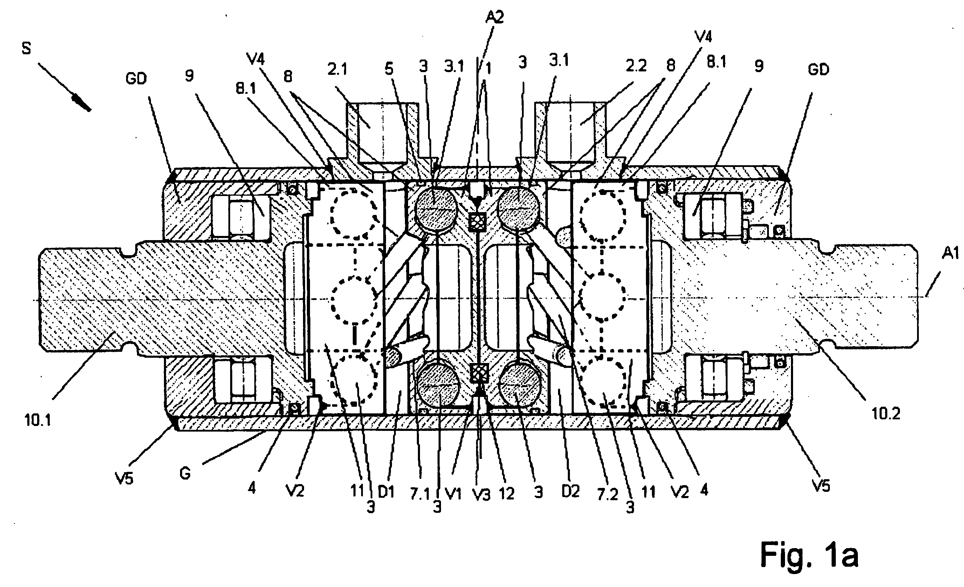

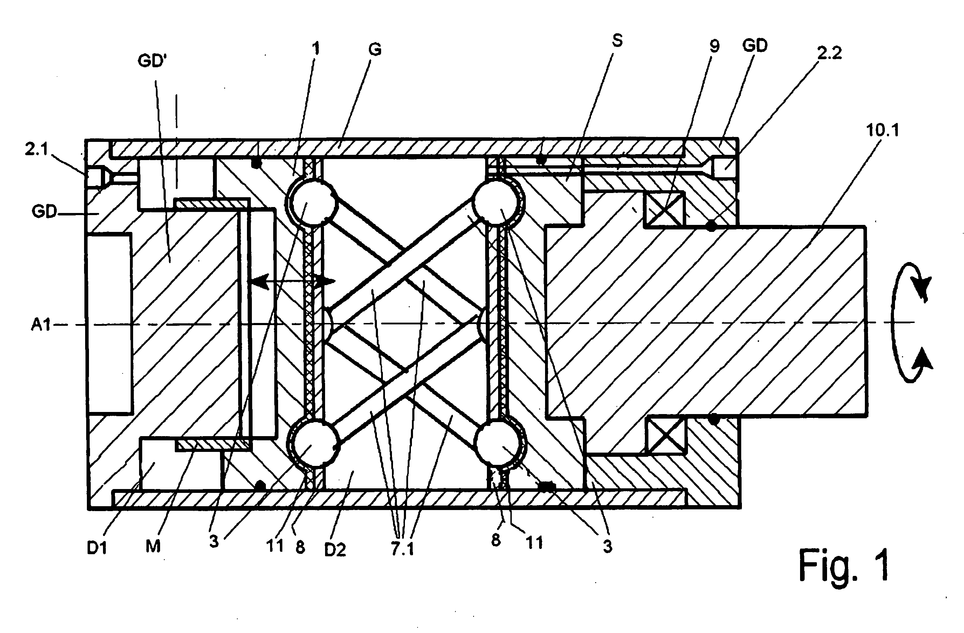

Fig. 1 zeigt die Prinzipdarstellung eines Gelenkmoduls S mit einer Drehwelle 10.1 und axialen Druckmittelzuführungen 2.1, 2.2 in Ausgangsstellung. In einem Gehäuse G ist ein Kolben 1 angeordnet, der über eine keilnabenverzahnte Schiebemuffe M drehfest und axial verschiebbar gelagert ist. Die Schiebemuffe M sitzt dabei auf einem in Richtung zum Kolben weisenden Absatz GD' des Gehäusedeckels GD, der das Gehäuse G auf dieser Seite verschließt Zwischen Kolben 1 und Gehäusedeckel GD wird ein erster Druckraum D1 gebildet, zu dem die erste Druckmittelzuleitung 2.2 führt. An der dem Gehäusedeckel GD abgewandten Seite des Kolbens 1 sind über einen Befestigungsring 8 und einen kolbenseitigen Kalottenring 11 die Kugeln 3 der einen Enden von vier Kugelstangen (erste Koppelelemente 7.1) schwenkbar in nicht näher bezeichneten Kugelkalotten gelagert. Die Kugeln 3 der gegenüberliegenden Enden der Kugelstangen (erste Koppelelemente 7.1) sind ebenfalls schwenkbar in Kugelkalotten eines zweiten Befestigungsrings 8 und eines drehwellenseitigen Kalottenrings 11 gelagert. Die Kugeln 3 und die Kugelkalotten der Befestigungsringe 8 und der Kalottenringe 11 bilden somit Kugelgelenke. Zwischen den beiden Befestigungsringen 8 wird ein zweiter Druckraum D2 mit einer Druckmittelzuleitung 2.2 gebildet. Der vom Kolben 1 beabstandete Befestigungsring 8 und der Kalottenring 11 sind über ein Zwischenstück S mit einer ersten Drehwelle 10.1 verbunden, die sich über ein axiales Drucklager 9 am anderen Gehäusedeckel GD abstützt und im Gehäuse G drehbar gelagert. Die erste Drehwelle 10.1 ragt durch den Gehäusedeckel GD. Die vier Kugelstangen (Koppelelemente 7.1) sind alle im gleichen Winkel geneigt und in gleichen Abständen auf einem gemeinsamen Teilkreis angeordnet. Die Gehäusedeckel GD sind dicht mit dem Gehäuse G verschweißt. Der Kolben 1 und das Zwischenstück S dichten zur Innenwand des Gehäuses G und der die drehwellenseitige Gehäusedeckel GD zum Außendurchmesser der Drehwelle 10.1 mittels nicht bezeichneter Dichtungen ab.

### Die Wirkungsweise ist folgende:

Bei Beaufschlagung des zylindrischen Kolbens 1 über den ersten Hydraulikanschluss (Druckmittelzuführung 2.1) verschiebt sich der Kolben 1 verdrehsicher mittels der keilnabenverzahnten Schiebemuffe M in Richtung zur ersten Drehwelle 10.1. Die Kolbenkraft wird über die Kugelstangen (Koppelelemente 7.1) auf die Befestigungsringe 8 und die Kalottenringe 11 übertragen. Infolge der räumlichen Schrägstellung der vier Koppelelemente 7 wird im in den Kalottenringen 11 eine axiale und eine in Umfangsrichtung wirkende Kraftkomponente erzeugt, wobei sich die vier Koppelelemente 7.1 immer weiter neigen. Die Umfangskomponente bewirkt über das Zwischenstück S auf die erste Drehwelle die gewünschte Drehkraft, deren Größe eine Funktion der Kolbenkraft und des Kugelstangenraumwinkels ist. Die axiale Komponente wird über das Drucklager 9 kompensiert.
Die gegenläufige Drehrichtung wird durch eine Beaufschlagung des Druckraums D2 über den Hydraulikanschluss 2.2 bewirkt. Dabei wird der Anstellwinkel der Koppelelemente 7.2 wieder größer. Das Gehäuse G ist mit dem kolbenseitigen Gehäusedeckel GD als Gegenlager (Festlager) zur ersten Drehwelle 10.1 ausgelegt, so dass das Drehmoment des Gelenkmoduls zwischen Gehäuse G und Drehwelle 10.1 entsteht.

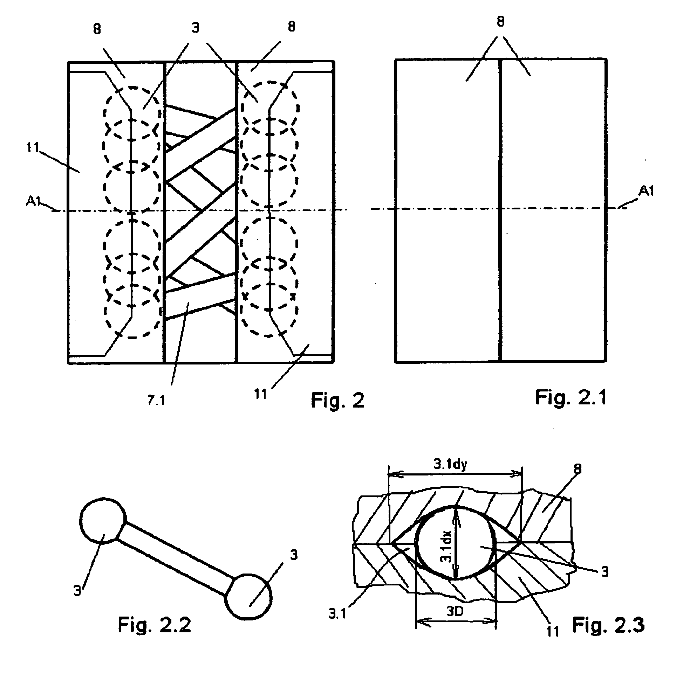

Fig. 1a zeigt einen spiegelbildlich aufgebauten Gelenkmodul S mit zwei Drehwellen 10.1, 10.2 und radialen Druckmittelzuführungen 2.1, 2.2 im Längsschnitt. Im Gehäuse G sitzt der Kolben 1 (hier in mittiger Stellung), der über Koppelelemente 7.1 und 7.2 in Form von Kugelstangen mit den beidseitig zum Kolben 1 angeordneten, um eine Längsachse A1 drehbaren, Drehwellen 10.1, 10.2 in Wirkverbindung steht. Die Kugelstangen (Koppelelemente 7.1, 7.2) sind mit ihren endseitig angeordneten Kugeln 3 sowohl am Kolben 1 als auch an den Drehwellen 10.1, 10.2 über kugelgelenkartige Verbindungen befestigt und werden mittels Befestigungsringen 8 fixiert. Zwischen dem Kolben 1 und der ersten Drehwelle 10.1 ist ein erster Druckraum D1 und zwischen dem Kolben 1 und der zweiten Drehwelle 10.2 ein zweiter Druckraum D2 ausgebildet. Zum ersten Druckraum D1 führt durch das Gehäuse G eine erste Druckmittelzuführung 2.1 und zum zweiten Druckraum D2 eine zweite Druckmittelzuführung 2.2 in radialer Richtung. Jede Drehwelle 10.1, 10.2 stützt sich über ein axiales Drucklager 9 an endseitig angeordneten Gehäusedeckeln GD ab. Zwischen dem Drucklager 9 und den Druckräumen D1, D2 ist jeweils eine Dichtung 4 vorgesehen. Durch eine Bewegung des Kolbens 1 durch Druckbeaufschlagung der Druckräume D1, D2 wird eine gegenläufige Schwenkbewegung der Drehwellen 10.1, 10.2 erzeugt.
Die als Kugelstangen ausgebildeten Koppelelemente 7.1 und 7.2 mit ihren endseitig angeordneten Kugeln 3 sind in den sie teilweise umschließenden Befestigungsringen 8 derart fixiert, dass die Befestigungsringe 8 spaltfrei ("auf Block") aneinander liegen können (Fig. 2.1). Das vereinfacht die Montage des Gelenkmoduls S. Die Fig. 2 und Fig. 2.1 zeigen hierbei in schematischer Darstellung die der Drehwelle 10.1 zugeordnete kugelgelenkartige Verbindung mit nur angedeuteten Kolben 1 und Kalottenring 11. Die gleiche Verbindung ist spiegelbildlich zu der orthogonal zu der Längsachse A1 verlaufenden Mittenachse A2 des Kolbens 1 auf der Seite der Drehwelle 10.2 angeordnet.

In dem gezeigten Beispiel (Fig. 1 a) sind vorzugsweise die auf einer Seite des Kolbens 1 angeordneten erste Drehwelle 10.1 und ersten Koppelelemente 7.1 und die auf der anderen Seite des Kolbens 1 angeordneten zweite Drehwelle 10.2 und zweiten Koppelelemente 7.2 spiegelbildlich zur Mitte des Kolbens 1 angebracht. Es ist aber auch möglich, die auf einer Seite des Kolbens 1 befindlichen ersten Koppelelemente 7.1 zu den auf der anderen Seite des Kolbens 1 befindlichen zweiten Koppelelementen 7.2 in Umfangsrichtung versetzt anzuordnen, wodurch ein Toleranzausgleich gegeben ist (nicht dargestellt).
So können z.B. drei erste Koppelelemente 7.1 und z.B. drei zweite Koppelelemente 7.2 spiegelbildlich (Fig. 1a) oder auch in Umfangsrichtung versetzt zueinander (nicht dargestellt) angeordnet sein. Außerdem nehmen die Koppelelemente 7.1, 7.2 eine räumliche Winkelstellung ein, so dass sich bei einem spiegelbildlichen Aufbau ein nahezu konstanter Drehmomentverlauf über den Drehwinkel und damit ein gleichmäßiger Kraftverlauf ergibt.
Die Befestigungsringe 8 sind in axialer Richtung, d.h. in Richtung der Längsachse A1 der Drehwellen 10.1, 10.2 entweder mit dem die Kugeln 3 der Koppelelemente 7.1, 7.2 aufnehmenden Kolben 1 mittels einer ersten axialen Schweißnaht V1 oder mit dem Gegenstück des Kolbens 1, einem ebenfalls die Kugeln 3 umschließenden Kalottenring 11 mittels einer zweiten axialen Schweißnaht V2 , vorzugsweise durch Elektronenstrahlschweißen, verbunden. Zu diesem Zweck weist der Befestigungsring 8 einen den Kalottenring 11 übergreifenden Rand 8.1 auf, an dem die Schweißnaht V2 in axialer Richtung angebracht wird. Auf der anderen Seite übergreift ein weiterer Befestigungsring 8 mit seinem umfangsseitigen Rand 8.1 den Kolben 1, mit welchem er ebenfalls über eine axiale Schweißnaht V1 verbunden ist. Die Anbringung der Schweißnähte V1, V2 in axialer Richtung - das heißt in Richtung der Längsachse A1 - hat den Vorteil, dass kein Verspannen der Kugeln 3 erfolgt. Es ist aber auch der Einsatz anderer Schweißverfahren oder anderer stoffschlüssiger Verbindungen möglich.
In Fig. 1a ist zudem zu sehen, dass der Befestigungsring 8 und der Kalottenring 11 radial nach außen in Richtung des Gehäuses G eine kegelförmige Schräge aufweisen, die bei dem Befestigungsring 8 in den Rand 8.1 übergeht. Auf Grund des sich dadurch vergrößernden Umschließungswinkel der Kugeln 3 sind auch größere Kräfte möglich.
Dabei sind zur Erleichterung der Montage der Koppelelemente 7.1, 7.2 die Befestigungsringe 8 in radialer Richtung nach außen oder nach innen geschlitzt. Die Befestigungsringe 8 weisen zudem Kugelkalotten 3.1 auf, die zur Aufnahme der Kugeln 3 der Koppelelemente 7.1, 7.2 vorgesehen sind. Auch der Kolben 1 und der Kalottenring 11 besitzen zur Aufnahme der Kugeln 3 entsprechende Kugelkalotten 3.1.

Die als Kugelstangen ausgebildeten Koppelelemente 7.1, 7.2 (Fig. 2.2) werden dabei vorzugsweise aus einem Stück in einem Umformverfahren mit oder ohne Polabflachung hergestellt.

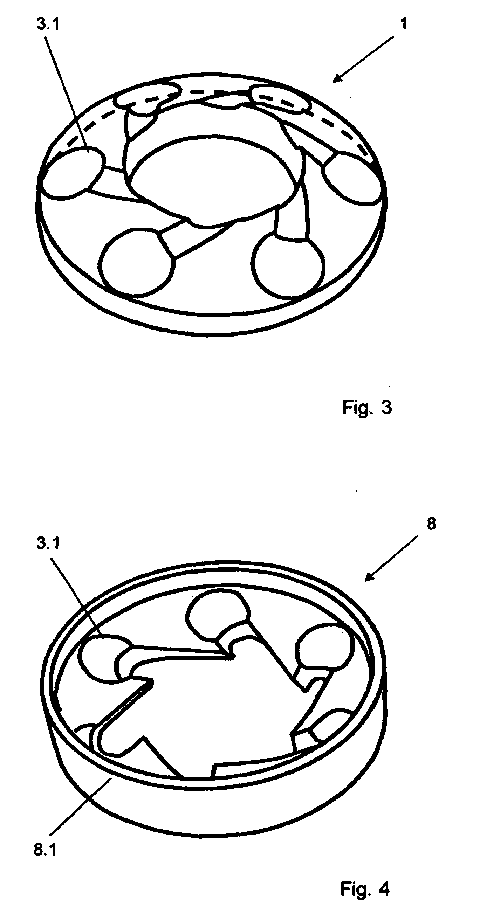

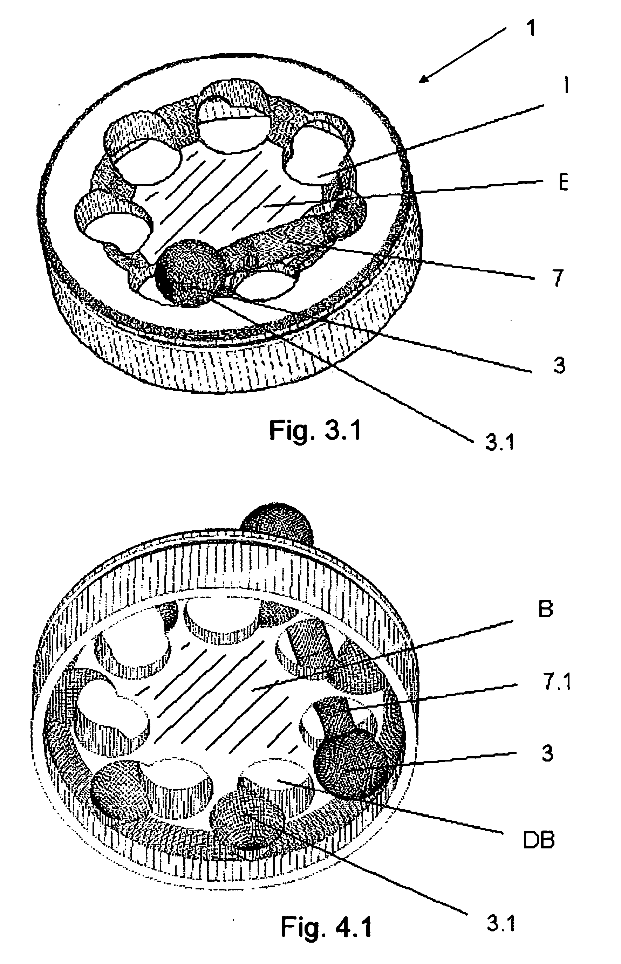

Fig. 3 zeigt hier den die Koppelelemente 7.1, 7.2 aufnehmenden Teil des Kolbens 1 mit den Kugelkalotten 3.1.

Fig. 4 zeigt einen Befestigungsring 8 mit den Kugelkalotten 3.1 und den hochgezogenen Rand 8.1, der den Kolben 1 bzw. den Kalottenring 11 umgreift und mit diesen stoffschlüssig - mittels Schweißnaht V1 bzw. V2 - verbunden wird. Der Durchmesser der die Kugel 3 aufnehmenden Kugelkalotte 3.1 ist größer als der Durchmesser der Kugel 3, wobei der Abstand der Kalottenpole zueinander aber gleich dem Durchmesser der Kugel 3 des Koppelelementes 7.1, 7.2 ist.
Während die in Fig. 3 und Fig. 4 dargestellten Kolben 1 und Befestigungsring 8 ohne Boden ausgeführt sind, besitzen die in Fig. 3.1 und Fig. 4.1 gezeigten Kolben 1 und Befestigungsring 8 - analog auch der Katottenring 11 - jeweils einen Boden B mit Durchbrüchen DB. Die Koppelelemente 7.1, 7.2 reichen durch diese Durchbrüche DB hindurch und werden mit ihren Kugeln 3 von den dort befindlichen Kugelkalotten 3.1 aufgenommen. Diese kompakte Ausführung des Kolbens 1, des Befestigungsringes 8 und des Kalottenringes 11 schafft eine höhere Funktionssicherheit und eine größere Steifigkeit gegenüber der weiter oben beschriebenen Ausführung ohne Boden. Zudem vereinfacht sich dadurch die Herstellung und die Montage.

Die Anordnung des Drucklagers 9 (Fig. 1 a) ist so vorgesehen, dass eine Drucklageranlagefläche am Wellenbund und die andere am Gehäusedeckel GD anliegt, so dass das Drucklager 9 sowohl bei Links- als auch bei Rechtslauf der Drehwelle 10.1, 10.2 in der gleichen Richtung beansprucht wird. Infolge der Druckbeaufschlagung können Querkräfte aufgenommen werden. Es kommt dadurch zu einer Stabilisierung der Drehwellen 10.1, 10.2. Zwischen den Druckräumen D1, D2 und dem Drucklager 9 ist jeweils eine Dichtung 4 angeordnet, wodurch immer eine Druckbeaufschlagung und eine Stabilisierung der Drehwellen 10.1, 10.2 gegeben ist.
Am Außenumfang der Befestigungsringe 8 sind Nuten 5 zur Aufnahme von Führungsringen angeordnet, welche dem Abstützen am Gehäuse G und einer besseren Spannungsverteilung dienen. Der Kolben 1 besteht vorzugsweise aus zwei Hälften, die spiegelbildlich zu einer orthogonal zu der Längsachse A1 verlaufenden Mittenachse A2 angeordnet sind. Die beiden Hälften sind dabei in der Dichtungsnut miteinander radial verschweißt (Schweißnaht V3), wobei mittels eines Zentrierringes 12 ihre zentrische Lagerung gesichert wird (Fig. 1 a). Auch die radial durch das Gehäuse G führenden Druckmittelleitungen 2.1, 2.2 sind über Schweißverbindungen V4 am Gehäuse G befestigt.
Die Verbindung der Drehwellen 10.1, 10.2 und des Gehäusedeckels GD mit den angrenzenden kraftübertragenden Bauteilen erfolgt ebenfalls vorzugsweise durch Schweißen mittels radialer Stumpfnaht (V5).

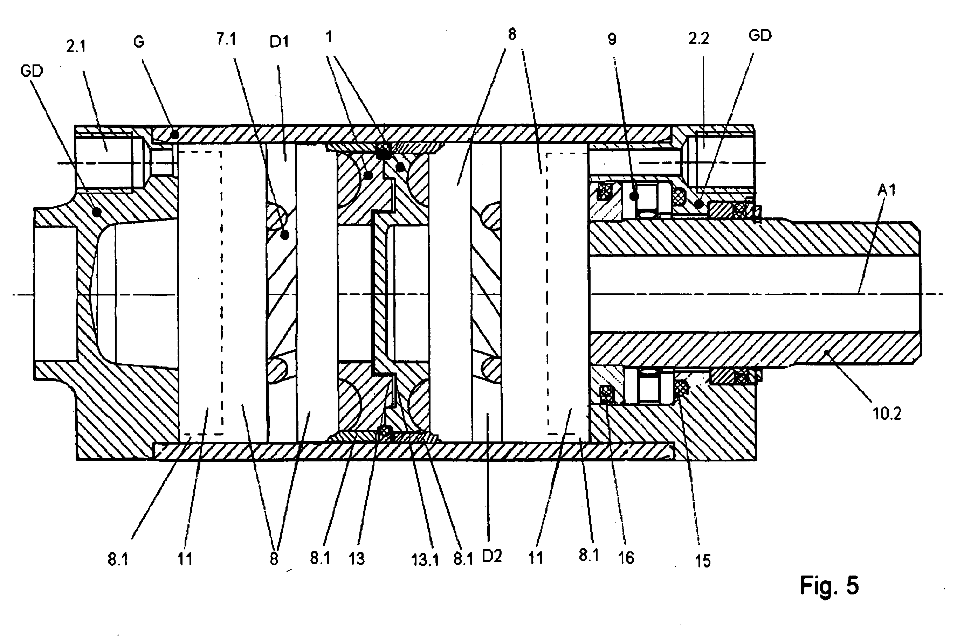

In Fig. 5 ist eine Ausführungsform des Gelenkmoduls S dargestellt, die eine axiale Druckmittelzuführung zeigt. Obwohl hier nur die Drehwelle 10.2 dargestellt ist, soll hier die spiegelbildliche Anordnung der Drehwellen 10.1 und 10.2 analog dem oben beschriebenen Ausführungsbeispiel erfolgen. Dabei führt die erste Druckmittelzuführung 2.1 durch einen der am Gehäuse G beidseitig angeordneten Gehäusedeckel GD in Richtung der Längsachse A1 zu dem ersten Druckraum D1, während die zweite Druckmittelzuführung 2.2 durch den anderen Gehäusedeckel GD ebenfalls in axialer Richtung zu dem zweiten Druckraum D2 führt.

Durch diese platzsparende Anordnung der axialen Druckmittelzuführung kann der Bauraum des Gelenkmoduls S gegenüber der Ausführung mit radialer Druckmittelzuführung nochmals verringert werden.
An Stelle des in Fig. 1 verwendeten Fixierringes 12 ist dabei eine andere Form der Fixierung der beiden Hälften des Kolbens 1 vorgesehen. Es weist die eine Hälfte des Kolbens 1 einen Vorsprung 13 auf, der in eine Ausnehmung 13.1 der sich anschließenden Hälfte des Kolbens 1 lagefixierend eingreift.

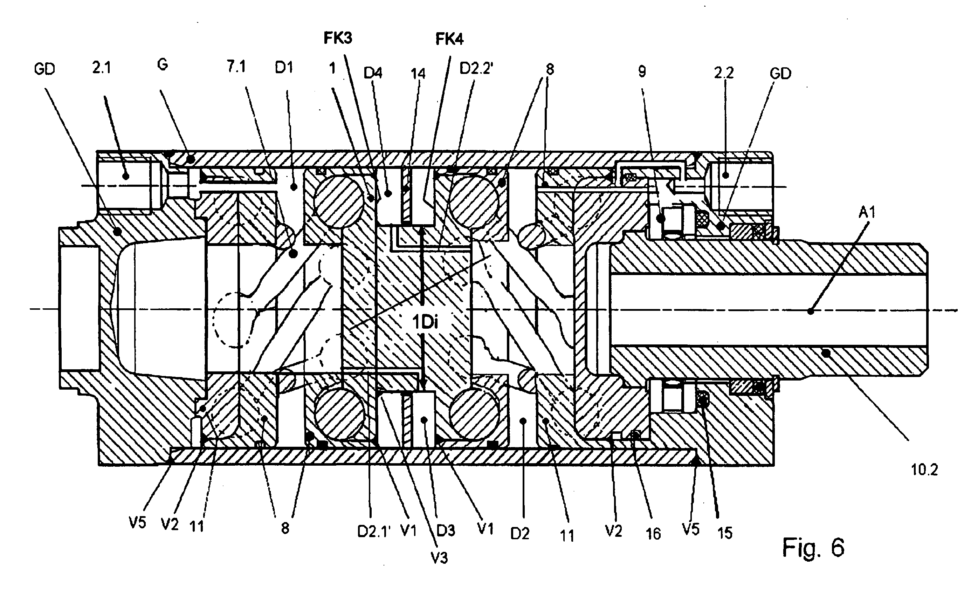

Eine weitere vorteilhafte Ausführung sieht gern. Fig. 6 einen zusätzlichen Druckraum D3 und einen zusätzlichen Druckraum D4 in dem Kolben 1 vor. Dabei ist der Kolben 1 im Längsschnitt gesehen H-förmig ausgebildet mit einem mittigen verringerten Durchmesser -1Di. Zwischen dem Gehäuse G und dem Mittelstück des "H" wird hierbei ein ringförmiger Hohlraum gebildet, der durch eine Trennwand 14 in zwei Räume geteilt wird. Die ebenfalls ringförmig ausgebildete Trennwand 14 ist an ihrem Außendurchmesser an dem Gehäuse G befestigt, während sie an ihrem Innendurchmesser einen Dichtring aufweist, über dem sie an dem verringerten Durchmesser -1Di des Kolbens 1 anliegt. Im Kolben 1wird dadurch im dritten Druckraum D3 eine dritte Kolbenfläche FK3 und im vierten Druckraum D4 eine vierte Kolbenfläche FK4 gebildet. Eine vom Druckraum D1 ausgehende erste Verbindungsleitung 2.1' führt in einen sich in Richtung der Längsachse A1 vom ersten Druckraum D1 aus gesehen hinter der Trennwand 14 befindenden dritten Druckraum D3.
Eine zweite Verbindungsleitung 2.2' verbindet den zweiten Druckraum D2 mit dem sich in Richtung der Längsachse A1 vom Druckraum D2 aus gesehen hinter der Trennwand 14 befindenden vierten Druckraum D4.
Durch diese Anordnung der beiden zusätzlichen Druckräume D3 und D4 kann die hydraulische Wirkfläche und somit der Anpressdruck vergrößert werden. Wird beispielsweise über die Druckmittelzuführung 2.1 ein Druck in dem ersten Druckraum D1 aufgebaut, so gelangt das Druckmittel über die Verbindungsleitung 2.1' auch in den dritten Druckraum D3. Somit ist eine hydraulische Angriffsfläche vorhanden, die von dem sich in den Druckräumen D1 und D3 aufbauenden Druck bedient wird. Analog erfolgt der Druckaufbau in den Druckräumen D2 und D4.

Ein O-Ring 15 wirkt dabei als axiales Federelement für das Drucklager 9 und dient zum axialen Spielausgleich sowie zur Vermeidung von Arbeitsgeräuschen.
Eine am Außendurchmesser des Kalottenrings 11 angeordnete Dichtung 16 nimmt das an der Drehwelle 10.1, 10.2 anfallende Biegemoment auf.
Der derart ausgeführte erfindungsgemäße Gelenkmodul zeichnet sich bei kleiner Bauweise durch einen relativ hohen Wirkungsgrad aus. Durch die Verwendung eines Kolbens 1 mit einem relativ dünnen Kolbenboden kommt es zu einer elastischen Verformung und damit zum Abbau von Spannungen. Ein ausgeglichener Spannungsverlauf ist somit gesichert.
Die in axialer Richtung der Längsachse A1 des Gelenkmoduls S angeordneten Schweißnähte V1, V2 verhindern ein Verspannen der kugelgelenkarügen Verbindungen und schaffen einen guten Toleranzausgleich. Zudem ermöglicht die Anordnung der Koppelelemente einen ausgewogenen Drehmomentverlauf. Außerdem kann der erfindungsgemäße Gelenkmodul durch die Verwendung von zwei Wellenausgängen (Fig. 1a) gleichzeitig als Stabilisatorstützlager ausgebildet werden.

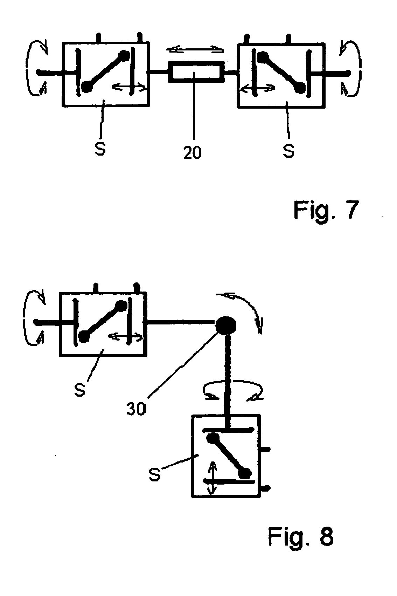

Gem. Fig. 7 ist es möglich, eine Einrichtung zum Ausgleich und/oder zur Übertragung von Kräften/Momenten und Drehbewegungen zwischen zwei Bauteilen herzustellen, bei welcher zwei Gelenkmodule S hintereinander angeordnet und über einen Axialausgleich 20 in axialer Richtung zueinander verstellbar bzw. bewegbar angeordnet sind. Dadurch können zusätzlich Axialbewegungen kompensiert oder erzeugt werden.

Weiterhin können zwei Gelenkmodule S im Winkel von 90Grad versetz zueinander angeordnet (Fig. 8) und z. B. über ein Gelenk 30 zueinander schwenkbar sein.

Damit ist es möglich Bewegungen in unterschiedlichste Richtungen zu erzeugen oder auszugleichen.

## Patentansprüche

1. Einrichtung zum Ausgleich und/oder zur Übertragung von Kräften/Momenten und Drehbewegungen zwischen zwei Bauteilen, insbesondere zum Ausgleich von Fahrzeugbewegungen, wobei wenigstens ein Kugelstangengelenkmodul (S) zwischen den zwei Bauteilen angeordnet ist, wobei der Kugelstangengelenkmodul mit Koppelelementen in Form von an beiden Enden mittels Kugeln gelenkig gelagerten Kugelstangen ausgebildet ist, die eine räumliche Winkelstellung einnehmen, **dadurch gekennzeichnet dass** mit dem Kugelstangengelenkmodul eine translatorische und/oder rotatorische Bewegung eines druckmittelbeaufschlagten Kolbens (1) in eine rotatorische Bewegung
- einer ersten Drehwelle oder
- einer ersten und einer zweiten Drehwelle wandelbar ist,
wobei jeweils zwischen Kolben und erster und/oder zweiter Drehwelle wenigstens ein Kugelstangengelenkmodul angeordnet ist, und dass die an ihren Enden Kugeln aufweisenden Koppelelemente (7.1, 7.2) kolbenseitig und drehwellenseitig mittels jeweils eines Befestigungsrings (8) fixiert sind, wobei die Befestigungsringe (8) einen Boden aufweisen, in dem konkav gekrümmte Ausnehmungen zur Bildung von Kugelkalotten angeordnet sind und wobei
- der Boden einen mittigen Durchbruch aufweist, von dem aus in radialer Richtung nach außen Schlitze zu den Ausnehmungen führen und dass die Schlitze eine Breite aufweisen, die größer ist als der Durchmesser Stange ist, welche die Kugeln der Kugelstange verbindet
oder
- dass jeder Ausnehmung eine in radialer Richtung und/oder in Umfangsrichtung versetzte Bohrung (DB) zugeordnet ist, die in die Ausnehmung übergeht und deren Durchmesser größer ist als der Kugeldurchmesser.

2. Einrichtung nach Anspruch 1, **dadurch gekennzeichnet, dass** mehrere Kugelstangengelenkmodule miteinander gekoppelt sind.

3. Einrichtung nach Anspruch 1 oder 2, **dadurch gekennzeichnet, dass** jeweils ein Kugelstangengelenkmodul (S) in einem Gehäuse (G) angeordnet ist oder dass mehrere Kugelstangengelenkmodule in einem gemeinsamen Gehäuse angeordnet sind.

4. Einrichtung nach einem der Ansprüche 1 bis 3, **dadurch gekennzeichnet, dass** jeweils zwei Kugelstangengelenkmodule zueinander axial bewegbar und zueinander schwenkbar angeordnet sind.

5. Einrichtung nach einem der Ansprüche 1 bis 4, **dadurch gekennzeichnet, dass** beidseitig zum Kolben Druckräume angeordnet sind und dass der Kolben mit der ersten Drehwelle über erste Koppelelemente (7.1), in Wirkverbindung steht, wobei zu einem oder beiden Druckräumen (D1, D2) je eine Druckmittelleitung (2.1, 2.2) in axialer Richtung des Kugelstangengelenkmoduls (S) durch das Gehäuse (G) führt.

6. Einrichtung nach einem der Ansprüche 1 bis 5, **dadurch gekennzeichnet, dass** der Befestigungsring kolbenseitig und drehwellenseitig in axialer Richtung des Kugelstangengelenkmoduls stoffschlüssig verbunden/verschweißt ist.

7. Einrichtung nach einem der Ansprüche 1 bis 6, **dadurch gekennzeichnet, dass** die Kugeln der Koppelelemente (7.1, 7.2) kolbenseitig und/oder drehwellenseitig in Kugelkalotten (3.1) fixiert sind, wobei die Kugelkalotten (3.1) in radialer Richtung sich zu einem Durchmesser (3.1dy) erweitern, der größer ist als der Durchmesser (3D) der Kugeln (3), wobei der Kalottenpolabstand (3.1dx) der Kugelkalotten (3.1) gleich dem Durchmesser (3D) der Kugel (3) ist.

8. Einrichtung nach einem der Ansprüche 1 bis 7, **dadurch gekennzeichnet, dass** der Kolben (1) einen mit dem ersten Druckraum (D1) verbundenen dritten Druckraum (D3) und einen mit dem zweiten Druckraum (D2) verbundenen vierten Druckraum (D4) aufweist.

9. Einrichtung nach einem der Ansprüche 1 bis 8, **dadurch gekennzeichnet, dass** auf der der ersten Drehwelle (10.1) gegenüberliegenden Seite des Kolbens (1) ein zweiter Wellenausgang in Form der zweiten Drehwelle (10.2) angeordnet ist, die über zweite Koppelelemente (7.2), die an beiden Enden drehbeweglich gelagert sind, mit dem Kolben (1) in Wirkverbindung steht.

10. Einrichtung nach einem der Ansprüche 1 bis 9, **dadurch gekennzeichnet, dass** der Kolben (1) axialbeweglich und drehbeweglich gelagert ist und dass zwischen der ersten Drehwelle (10.1) und dem Kolben (1) ein erster Druckraum (D1) angeordnet ist, zu dem die erste Druckmittelleitung (2.1) führt und dass auf der anderen Seite des Kolbens (1) ein zweiter Druckraum (D2) angeordnet ist, zu dem die zweite Druckmittelleitung (2.2) führt, wobei der zweite Druckraum (D2) zwischen dem Kolben (1) und einem gehäuseseitigen Deckel oder zwischen dem Kolben (1) und der zweiten Drehwelle (10.2) angeordnet ist.

11. Einrichtung nach einem der Ansprüche 8 bis 10, **dadurch gekennzeichnet, dass** die mit dem ersten Druckraum (D1) verbundene erste Druckmittelleitung (2.1) und die mit dem zweiten Druckraum (D2) verbundene zweite Druckmittelleitung (2.2) entweder in Richtung der Längsachse (A1) durch am Gehäuse (G) beidseitig angeordnete Gehäusedeckel (GD) oder über am Gehäuse (G) befestigte Anschlüsse in radialer Richtung durch das Gehäuse (G) führen.

12. Einrichtung nach einem der Ansprüche 1 bis 11, **dadurch gekennzeichnet, dass** die als Kugelstangen ausgebildeten Koppelelemente (7.1, 7.2) kolbenseitig mit ihren endseitig angeordneten Kugeln (3) in Kugelkalotten (3.1) des Kolbens und des Befestigungsrings (8) und drehwellenseitig mit ihren endseitig angeordneten Kugeln (3) in Kugelkalotten (3.2) eines drehwellenseitig befestigten Kalottenrings (11) des Kolbens und des Befestigungsrings (8) fixiert sind.

13. Einrichtung nach Anspruch 8 bis 12, **dadurch gekennzeichnet, dass** jeweils ein Befestigungsring (8) mit dem Kolben (1) und jeweils ein Befestigungsring (8) mit dem Kalottenring (11) stoffschlüssig, insbesondere über eine aus axialer Richtung erzeugte Schweißnaht (V2) eine Schweißnaht (V2) verbunden ist.

14. Einrichtung nach einem der Ansprüche 8 bis 13, **dadurch gekennzeichnet, dass** die Befestigungsringe (8) jeweils einen den Kolben (1) oder den Kalottenring (11) in axialer Richtung umfangsseitig übergreifenden Rand (8.1) besitzen, wobei der Rand (8.1) jeweils mit dem Kolben (1) und dem Kalottenring (11) verschweißt ist.

15. Einrichtung nach einem der Ansprüche 1 bis 14, **dadurch gekennzeichnet, dass** der Kolben (1) in seinem mittleren Bereich einen reduzierten Durchmesser (1Di) aufweist, an den sich eine dritte und vierte Kolbenfläche (FK3, FK4) anschließt, wobei sich der dritte und der vierte Druckraum (D3, D4) in einem Hohlraum zwischen dem Gehäuse (G), dem reduzierten Durchmesser (1Di) und der dritten und vierten Kolbenfläche (FK3, FK4) des Kolbens (1) befinden und durch eine Trennwand (14) voneinander getrennt sind, wobei der erste Druckraum (D1) über eine erste Verbindungsleitung (D2.1') mit dem sich auf der dem Druckraum (D1) abgewandten Seite der Trennwand (14) befindlichen dritten Druckraum (D3) in Verbindung steht und der zweite Druckraum (D2) über eine zweite Verbindungsleitung (D2.2') mit dem sich auf der dem Druckraum (D2) abgewandten Seite der Trennwand (14) befindlichen vierten Druckraum (D4) in Verbindung steht.

16. Einrichtung nach Anspruch 15, **dadurch gekennzeichnet, dass** die Trennwand (14) an ihrem Außendurchmesser am Gehäuse (G) befestigt ist und an ihrem Innendurchmesser am reduzierten Durchmesser (Di) des H-förmigen Kolbens (1) den dritten und den vierten Druckraum (D3, D4) zueinander abdichtend anliegt.

17. Einrichtung nach einem der Ansprüche 1 bis 16, **dadurch gekennzeichnet, dass** die auf einer Seite des Kolbens (1) angeordnete erste Drehwelle (10.1) und die ersten Koppelelemente (7.1) und die auf der anderen Seite des Kolbens (1) angeordnete zweite Drehwelle (10.2) und die zweiten Koppelelemente (7.2) spiegelbildlich zur Mittenachse (A2) des Kolbens (1) angeordnet sind, wobei die Mittenachse (A2) senkrecht zur Längsachse (A1) der Drehwellen (10.1, 10.2) verläuft.

18. Einrichtung nach einem der Ansprüche 1 bis 17, **dadurch gekennzeichnet, dass** die auf einer Seite des Kolbens (1) angeordneten ersten Koppelelemente (7.1) zu den auf der anderen Seite des Kolbens (1) angeordneten zweiten Koppelelementen (7.2) in Umfangsrichtung versetzt angeordnet sind.

19. Einrichtung nach einem der Ansprüche1 bis 18, **dadurch gekennzeichnet, dass** die erste Drehwelle (10.1) und/oder die zweite Drehwelle (10.2) durch eine Bewegung des Kolbens (1) durch Druckbeaufschlagung der Druckräume (D1) und/oder (D2) in Rotation versetzbar sind und dass bei druckentlasteten Druckräumen (D1, D2) beide Drehwellen (10.1, 10.2) entkoppelt und unabhängig voneinander schwenkbar sind und bei verschlossenen Druckmittelleitungen (2.1, 2.2) beide Drehwellen (10.1, 10.2) miteinander starr gekoppelt sind.

20. Einrichtung nach einem der Ansprüche 1 bis 19, **dadurch gekennzeichnet, dass** sich jede Drehwelle (10.1, 10.2) über ein axiales Drucklager (9) an einem endseitig angeordneten Gehäusedeckel (GD) abstützt.

21. Einrichtung nach einem der Ansprüche 1 bis 20, **dadurch gekennzeichnet, dass** mindestens ein erstes Koppelelemente (7.1) und mindestens ein zweites Koppelelement (7.2) spiegelbildlich zueinander angeordnet sind und/oder dass mindestens ein erstes Koppelelement (7.1) und mindestens ein zweites Koppelelement (7.2) versetzt zueinander angeordnet sind.

22. Einrichtung nach einem der Ansprüche 1 bis 21, **dadurch gekennzeichnet, dass** der Kolben (1) senkrecht zur Längsachse (A1) der Drehwellen (10.1, 10.2) in zwei Hälften geteilt ist, wobei die beiden Hälften des Kolbens (1) mittels eines Zentrierringes (12) insbesondere zentrisch derart gelagert sind, dass ein Vorsprung (13) einer Hälfte des Kolbens (1) in eine Ausnehmung (13.1) der sich anschließenden Hälfte des Kolbens (1) lagefixierend eingreift.

23. Einrichtung nach Anspruch 22, **dadurch gekennzeichnet, dass** die Kolbenhälften miteinander stoffschlüssig verbunden sind und/oder dass mit dem Gehäuse (G) Gehäusedeckel (GD) stoffschlüssig verbunden sind.

## Claims

1. A device for compensating and/or transmitting forces/torques and rotational movements between two components, especially for compensating movements of vehicles, with at least one ball-head suspension rod joint module (S) being arranged between the two components, with the ball-head suspension rod joint module being arranged with coupling elements in form of ball-head suspension rods which are mounted in an articulated manner by means of balls at the two ends and which assume a spatially angular position, **characterized in that** a translatory and/or rotational movement of a piston (1) pressurized by a pressure medium can be converted into a rotational movement
- of a first turning shaft or
- a first and second turning shaft,
with at least one ball-head suspension rod joint module being respectively arranged between piston and first and/or second turning shaft, and that the coupling elements (7.1, 7.2) having balls at their ends are fixed on the piston side and turning shaft side by means of one respective fastening ring (8), with the fastening rings (8) having a bottom in which concave curved recesses are arranged for forming spherical caps, and with
- the bottom having a central breakthrough from which slits lead to the recesses in the radial direction to the outside, and that the slits have a width which is larger than the diameter of the rod which connects the balls of the ball-head suspension rod, or
- that each recess is associated with a bore (DB) which is offset in the radial direction and/or in the circumferential direction and which converges into the recess and whose diameter is larger than the ball diameter.

2. A device according to claim 1, **characterized in that** several ball-head suspension rod joint modules are coupled with each other.

3. A device according to claim 1 or 2, **characterized in that** one respective ball-head suspension rod joint module (S) is arranged in a housing (G), or that several ball-head suspension rod joint modules are arranged in a common housing.

4. A device according to one of the claims 1 to 3, **characterized in that** two respective ball-head suspension rod joint modules are arranged to be axially moveable with respect to each other and axially pivotable with respect to each other.

5. A device according to one of the claims 1 to 4, **characterized in that** pressure chambers are arranged on either side towards the piston and that the piston is in operative connection with the first turning shaft via first coupling elements (7.1), with one respective pressure-medium line (2.1, 2.2) leading to one or both of the pressure chambers (D1, D2) in the axial direction of the ball-head suspension rod joint module (S) through the housing (G).

6. A device according to one of the claims 1 to 5, **characterized in that** the fastening ring is materially connected/welded on the piston side or turning shaft side in the axial direction of the ball-head suspension rod joint module.

7. A device according to one of the claims 1 to 6, **characterized in that** the balls of the coupling elements (7.1, 7.2) are fixed in spherical caps (3.1) on the piston side and/or turning shaft side, with the spherical caps (3.1) expanding in the radial direction to a diameter (3.1dy) which is larger than the diameter (3D) of the balls (3), with the pole distance (3.1dx) of the spherical caps (3.1) being equal to the diameter (3D) of the ball (3).

8. A device according to one of the claims 1 to 7, **characterized in that** the piston (1) comprises a third pressure chamber (D3) connected with the first pressure chamber (D1) and a fourth pressure chamber (D4) connected with the second pressure chamber (D2).

9. A device according to one of the claims 1 to 8, **characterized in that** a second shaft output in form of the second turning shaft (10.2) is arranged on the side of the piston (1) which is opposite of the first turning shaft (10.1), which second turning shaft is in operative connection with the piston (1) via second coupling elements (7.2) which are mounted in a rotationally movable manner at both ends.

10. A device according to one of the claims 1 to 9, **characterized in that** the piston (1) is mounted in an axially movable and rotationally movable way, and that a first pressure chamber (D1) is arranged between the first turning shaft (10.1) and the piston (1), with the first pressure medium line (2.1) leading to said first pressure chamber, and that a second pressure chamber (D2) is arranged on the other side of the piston (1), with the second pressure medium line (2.2) leading to said second pressure chamber, with the second pressure chamber (D2) being arranged between the piston (1) and a cover on the housing side or between the piston (1) and the second turning shaft (10.2).

11. A device according to one of the claims 8 to 10, **characterized in that** the first pressure medium line (2.1) connected with the first pressure chamber (D1) and the second pressure line (2.2) connected with the second pressure chamber (D2) either lead in the direction of the longitudinal axis (A1) through housing covers (GD) arranged on either side of the housing (G), or in the radial direction through the housing (G) via connections fixed to the housing (G).

12. A device according to one of the claims 1 to 11, **characterized in that** the coupling elements (7.1, 7.2) arranged as ball-head suspension rods are fixed on the piston side with their balls (3) arranged at the end side in spherical caps (3.1) of the piston and the fastening ring (8) and on the turning shaft side with their balls (3), which are arranged at the end side, in spherical caps (3.2) of a cap ring (11) of the piston and the fastening ring (8), which cap ring is fastened on the turning shaft side.

13. A device according to one of the claims 8 to 12, **characterized in that** one respective fastening ring (8) is materially connected with the piston (1) and one respective fastening ring (8) with the cap ring (11), especially by way of a weld seam (V2) produced from the axial direction.

14. A device according to one of the claims 8 to 13, **characterized in that** the fastening rings (8) respectively comprise an edge (8.1) which reaches over the piston (1) or the cap ring (11) in the axial direction on the circumferential side, with the edge (8.1) respectively being welded together with the piston (1) and the cap ring (11).

15. A device according to one of the claims 1 to 14, **characterized in that** the piston (1) has a reduced diameter (1Di) in its middle region, which is bordered by a third and fourth piston surface (FK3, FK4), with the third and fourth pressure chamber (D3, D4) being disposed in a cavity between the housing (G), the reduced diameter (1Di) and the third and fourth piston surface (FK3, FK4), and being separated from one another by a partition wall (14), with the first pressure chamber (D1) being in connection via a first connecting line (D2.1') with the third pressure chamber (D3) disposed on the side of the partition wall (14) facing away from the pressure chamber (D1), and with the second pressure chamber (D2) being in connection via a second connecting line (D2.2') with the fourth pressure chamber (D4) disposed on the side of the partition wall (14) facing away from the pressure chamber (D2).

16. A device according to claim 15, **characterized in that** the partition wall (14) is fastened on its outside diameter to the housing (G) and rests on its inside diameter on the reduced diameter (Di) of the H-shaped piston (1) by sealing the third and fourth pressure chamber (D3, D4) with respect to one another.

17. A device according to one of the claims 1 to 16, **characterized in that** the first turning shaft (10.1) arranged on one side of the piston (1) and the first coupling elements (7.1) and the second turning shaft (10.2) arranged on the other side of the piston (1) and the second coupling elements (7.2) are arranged in a mirror-inverted manner in relation to the central axis (A2) of the piston (1), with the central axis (A2) extending perpendicularly to the longitudinal axis (A1) of the turning shafts (10.1, 10.2).

18. A device according to one of the claims 1 to 17, **characterized in that** the first coupling elements (7.1) which are arranged on one side of the piston (1) are arranged offset in the circumferential direction in relation to the second coupling elements (7.2) which are arranged on the other side of the piston (1).

19. A device according to one of the claims 1 to 18, **characterized in that** the first turning shaft (10.1) and/or the second turning shaft (10.2) can be made to rotate by a movement of the piston (1) by pressurization of the pressure chambers (D1) and/or (D2), and that when the two pressure chambers (D1, D2) are pressure-relieved both turning shafts (10.1, 10.2) are decoupled and are pivotable independently from one another, and both turning shafts (10.1, 10.2) are rigidly coupled with one another when the pressure medium lines (2.1, 2.2) are closed.

20. A device according to one of the claims 1 to 19, **characterized in that** each turning shaft (10.1, 10.2) is supported via an axial thrust bearing (9) on a housing cover (GD) arranged at the end side.

21. A device according to one of the claims 1 to 20, **characterized in that** at least one first coupling element (7.1) and at least one second coupling element (7.2) are arranged in a mirror-inverted manner with respect to each other, and/or that at least one first coupling element (7.1) and at least one second coupling element (7.2) are arranged offset with respect to each other.

22. A device according to one of the claims 1 to 21, **characterized in that** the piston (1) is divided into two halves perpendicularly to the longitudinal axis (A1) of the turning shafts (10.1, 10.2), with the two halves of the piston (1) being especially centrically mounted by means of a centering ring (12) in such a way that a projection (13) of one half of the piston (1) engages in a position-fixing way in a recess (13.1) of the adjacent half of the piston (1).

23. A device according to claim 22, **characterized in that** the piston halves are materially connected with each other and/or that housing covers (GD) are materially connected with the housing (G).

## Revendications

1. Dispositif d'équilibrage et/ou de transmission de forces/couples et de rotations entre deux composants, tout particulièrement d'équilibrage de mouvements de véhicule, sachant qu'au moins un module d'articulation à billes (S) est disposé entre les deux composants, sachant que le module d'articulation à billes est composé d'éléments de couplage consistant en des barres à billes articulées à l'aide de billes et logées aux deux extrémités, prenant une position en équerre dans l'espace, **caractérisé en ce qu'**avec le module d'articulation à billes, le mouvement de translation et/ou de rotation d'un piston (1) actionné par pression peut être transformé en un mouvement rotatif
- d'un premier arbre rotatif ou
- d'un premier et d'un deuxième arbre rotatif,
sachant qu'entre le piston et le premier et/ou le deuxième arbre rotatif est disposé au moins un module d'articulation à billes et que les éléments de couplage (7.1, 7.2) présentant des billes à leurs extrémités sont fixés par une bague de fixation (8) côté piston et côté arbre rotatif, sachant que les bagues de fixation (8) présentent un fond dans lequel sont disposées des exclusions concaves servant à former des calottes de billes et que
- le fond présente une ouverture centrale à partir de laquelle des encoches orientées vers l'extérieur dans le sens radial conduisent aux exclusions et que les encoches présentent une largeur supérieure au diamètre de la barre qui relie les billes de la barre à billes
ou
- que chaque exclusion est affectée à une perforation (DB) déportée dans le sens radial et/ou dans le sens de la circonférence, laquelle est en porte-à-faux avec l'exclusion et dont le diamètre est plus grand que le diamètre des billes.

2. Dispositif selon la revendication 1, **caractérisé en ce que** plusieurs modules d'articulation à billes sont couplés entre eux.

3. Dispositif selon la revendication 1 ou 2, **caractérisé en ce qu'**un module d'articulation à billes (S) est respectivement disposé dans un boîtier (G) ou **en ce que** plusieurs modules d'articulation à billes sont disposés dans un même boîtier.

4. Dispositif selon l'une des revendications 1 à 3, **caractérisé en ce que** les modules d'articulation à billes sont disposés par deux de sorte à être mobiles dans le sens axial et pivotants l'un par rapport à l'autre.

5. Dispositif selon l'une des revendications 1 à 4, **caractérisé en ce que** des deux côtés du piston sont disposées des chambres sous pression et **en ce que** le piston est relié activement au premier arbre rotatif par des premiers éléments de couplage (7.1), sachant qu'un conduit de pression (2.1, 2.2) conduit respectivement à une ou aux deux chambres sous pression (D1, D2) dans le sens axial du module d'articulation à billes (S) à travers le boîtier (G).

6. Dispositif selon l'une des revendications 1 à 5, **caractérisé en ce que** la bague de fixation est reliée/soudée par fusion du côté du piston et du côté de l'arbre rotatif dans le sens axial du module d'articulation à billes.

7. Dispositif selon l'une des revendications 1 à 6, **caractérisé en ce que** les billes des éléments de couplage (7.1, 7.2) sont fixées dans des calottes de billes (3.1) du côté du piston et/ou du côté de l'arbre rotatif, sachant que dans le sens radial, le diamètre (3.1dy) des calottes de billes (3.1) devient plus grand que le diamètre (3D) des billes (3), sachant que l'écart interpolaire des calottes (3.1 dx) des calottes de billes (3.1) est identique au diamètre (3D) des billes (3).

8. Dispositif selon l'une des revendications 1 à 7, **caractérisé en ce que** le piston (1) présente une troisième chambre sous pression (D3) reliée à la première chambre sous pression (D1) et une quatrième chambre sous pression (D4) reliée à la deuxième chambre sous pression (D2).

9. Dispositif selon l'une des revendications 1 à 8, **caractérisé en ce que** sur le côté du piston opposé au premier arbre rotatif (10.1) est disposée une deuxième sortie d'arbre sous la forme du deuxième arbre rotatif (10.2) qui est en liaison active avec le piston (1) par le biais de deuxième éléments de couplage (7.2) mobiles et logés aux deux extrémités.

10. Dispositif selon l'une des revendications 1 à 9, **caractérisé en ce que** le piston (1) est logé de sorte à être mobile axialement et rotatif et **en ce qu'**entre le premier arbre rotatif (10.1) et le piston (1) est disposée une première chambre sous pression (D1) à laquelle mène le premier conduit de pression (2.1) et **en ce que** de l'autre côté du piston (1) est disposé une deuxième chambre sous pression (D2) à laquelle mène le deuxième conduit sous pression (2.2), sachant que la deuxième chambre sous pression (D2) est disposée entre le piston (1) et un couvercle de boîtier ou entre le piston (1) et le deuxième arbre rotatif (10.2).

11. Dispositif selon l'une des revendications 8 à 10, **caractérisé en ce que** le premier conduit de pression (2.1) relié à la première chambre sous pression (D1) et le deuxième conduit de pression (2.2) relié à la deuxième chambre sous pression (D2) conduisent soit à travers des couvercles de boîtier (GD) disposés des deux côtés du boîtier (G) dans le sens longitudinal (A1), soit à travers le boîtier (G) via des raccords fixés sur le boîtier (G) dans le sens radial.

12. Dispositif selon l'une des revendications 1 à 11, **caractérisé en ce que** les éléments de couplage (7.1, 7.2) consistant en des barres à billes sont fixés côté piston avec leurs billes (3) disposées à l'extrémité dans des calottes de billes (3.1) du piston et de la bague de fixation (8) et côté arbre rotatif, avec leurs billes (3) disposées à l'extrémité dans des calottes de billes (3.2) d'une bague de calotte (11) du piston et de la bague de fixation (8) fixée côté arbre rotatif.

13. Dispositif selon l'une des revendications 8 à 12, **caractérisé en ce que** respectivement, une bague de fixation (8) est reliée par matière au piston (1) et une bague de fixation (8) à la bague de calotte (11), en particulier au moyen d'une soudure (V2) faite dans le sens axiale.

14. Dispositif selon l'une des revendications 8 à 13, **caractérisé en ce que** les bagues de fixation (8) possèdent un bord (8.1) dépassant du piston (1) ou de la bague de calotte (11) dans le sens axial côté circonférence, sachant que le bord (8.1) est respectivement soudé au piston (1) et à la bague de calotte (11).

15. Dispositif selon l'une des revendications 1 à 14, **caractérisé en ce que** le piston (1) présente en son centre un diamètre réduit (1Di) contigu avec une troisième et quatrième surface de piston (FK3, FK4), sachant que la troisième et la quatrième chambre sous pression (D3, D4) se trouvent dans une chambre creuse entre le boîtier (G), le diamètre réduit (1DI) et la troisième et quatrième surface de piston (FK3, FK4) du piston (1) et sont séparées par une paroi (14), sachant que la première chambre sous pression (D1) est reliée via un premier raccord (D2.1') à la troisième chambre sous pression (D3) se trouvant sur le côté de la paroi (14) opposé à la chambre sous pression (D1) et que la deuxième chambre sous pression (D2) est reliée via un deuxième raccord (D2.2') à la quatrième chambre sous pression (D4) se trouvant sur le côté de la paroi (14) opposé à la chambre sous pression (D2).

16. Dispositif selon la revendication 15, **caractérisé en ce que** la paroi (14) est fixée au boîtier (G) au niveau de son diamètre extérieur et que sur son diamètre intérieur, au niveau du diamètre réduit (Di) du piston en forme de H (1), elle est contigüe à la troisième et à la quatrième chambre sous pression (D3, D4).

17. Dispositif selon l'une des revendications 1 à 16, **caractérisé en ce que** le premier arbre rotatif (10.1) disposé sur un côté du piston (1) et les premiers éléments de couplage (7.1), le deuxième arbre rotatif (10.2) disposé sur l'autre côté du piston (1) et les deuxièmes éléments de couplage (7.2) sont disposés symétriquement à l'axe central (A2) du piston (1), sachant que l'axe central (A2) est vertical à l'axe long-itudinal (A1) de l'arbre rotatif (10.1, 10.2).

18. Dispositif selon l'une des revendications 1 à 17, **caractérisé en ce que** les premiers éléments de couplage (7.1) disposés sur un côté du piston (1) sont décalés dans le sens de la circonférence par rapport aux deuxièmes éléments de couplage (7.2) disposés sur l'autre côté du piston (1).

19. Dispositif selon l'une des revendications 1 à 18, **caractérisé en ce que** le premier arbre rotatif (10.1) et/ou le deuxième arbre rotatif (10.2) peuvent être mis en rotation via un mouvement du piston (1) provoqué par une pression exercée par les chambres sous pression (D1) et/ou (D2) et **en ce que** lorsque les chambres sous pression (D1, D2) délestent de la pression, les deux arbres rotatifs (10.1, 10.2) se désolidarisent et pivotent indépendamment l'un de l'autre et que lorsque les conduits de pression (2.1, 2.2) sont fermés, les deux arbres rotatifs (10.1, 10.2) sont fermement couplés l'un à l'autre.

20. Dispositif selon l'une des revendications 1 à 19, **caractérisé en ce que** chaque arbre rotatif (10.1, 10.2) s'appuie via un palier à charge axiale (9) sur un couvercle de boîtier (GD) disposé à l'extrémité.

21. Dispositif selon l'une des revendications 1 à 20, **caractérisé en ce qu'**au moins un premier élément de couplage (7.1) et au moins un deuxième élément de couplage (7.2) sont symétriques et/ou **en ce qu'**au moins un premier élément de couplage (7.1) et au moins un deuxième élément de couplage (7.2) sont décalés l'un par rapport à l'autre.

22. Dispositif selon l'une des revendications 1 à 21, **caractérisé en ce que** le piston (1) est divisé en deux moitiés verticalement à l'axe longitudinal (A1) des arbres rotatifs (10.1, 10.2), sachant que les deux moitiés du piston (1) sont logées à l'aide d'une bague de centrage (12) et en particulier centrées de telle sorte qu'une saillie (13) d'une moitié du piston (1) est en prise fixe avec une exclusion (13.1) de la moitié contigüe du piston (1).

23. Dispositif selon la revendication 22, **caractérisé en ce que** les moitiés du piston sont reliées par matière l'une à l'autre et/ou reliées par matière avec le couvercle (GD) du boîtier (G).
